# EUROPÄISCHE PATENTSCHRIFT

(11) **EP 2 483 754 B1**
(45) Veröffentlichungstag und Bekanntmachung des Hinweises auf die Patenterteilung: **12.02.2020**
(21) Anmeldenummer: 10763659.9
(22) Anmeldetag: 29.09.2010
(51) Int. Cl.: G05B 19/042, H04L 12/10, H04L 12/413

(54) **AUTOMATISIERUNGSSYSTEM UND VERFAHREN ZUM BETRIEB EINES AUTOMATISIERUNGSSYSTEMS**
AUTOMATION SYSTEM AND METHOD FOR OPERATING AN AUTOMATION SYSTEM
SYSTÈME D'AUTOMATISATION ET PROCÉDÉ POUR LE FONCTIONNEMENT D'UN SYSTÈME D'AUTOMATISATION

(30) Priorität: 30.09.2009 DE 102009047864
(43) Veröffentlichungstag der Anmeldung: 08.08.2012
(73) Patentinhaber: Siemens Aktiengesellschaft, 80333 München (DE)
(72) Erfinder: UHL, Andreas, 91336 Heroldsbach (DE); WEBER, Karl, 90518 Altdorf (DE)
(86) Internationale Anmeldenummer: PCT/EP2010/064453
(87) Internationale Veröffentlichungsnummer: WO 2011/039252

(56) Entgegenhaltungen:
- EP-A1- 1 578 056
- DE-A1-102008 011 279
- US-A1- 2007 162 620
- US-A1- 2008 294 917

## Beschreibung

Ein Automatisierungssystem weist beispielsweise eine speicherprogrammierbare Steuerung (SPS/PLC) und/oder einen Stromrichter und/oder eine Bewegungssteuerung und/oder einen Sensor und/oder einen Aktuator usw. auf. Dieses sind Beispiele für Elemente des Automatisierungssystems. Elemente des Automatisierungssystems sind mittels eines Kommunikationsnetzwerkes miteinander verbunden, wobei diese Kommunikationsknoten ausbilden.

Eine Aufgabe der vorliegenden Erfindung ist es, ein Automatisierungssystem auszubilden, welches Energie einspart, bzw. Energie im System vorteilhaft verteilt.

Aus US 2008/0294917 A1 ist ein System und Verfahren bekannt, das es einem PoE-fähigen Switch ermöglicht, selektiv eine oder mehrere entfernte Vorrichtungen mit Strom zu versorgen, wenn die dem Switch selbst zugeführte Energie begrenzt ist oder versagt. In einer Ausführungsform empfängt der Schalter eine Benachrichtigung von einer unterbrechungsfreien Stromversorgung (USV) und versorgt als Reaktion auf den Empfang der Benachrichtigung selektiv eine oder mehrere vom Schalter gespeiste Vorrichtungen mit Strom. Das selektive Bereitstellen von Strom für eine oder mehrere der Vorrichtungen kann das Bereitstellen von Strom für nur eine Teilmenge der Vorrichtungen, das Bereitstellen einer unterschiedlichen Menge an Strom für verschiedene der Vorrichtungen oder das Bereitstellen von Strom für unterschiedliche Dauer für verschiedene Vorrichtungen beinhalten. In einer alternativen Ausführungsform kommuniziert der Schalter als Reaktion auf das Empfangen der Benachrichtigung mit einer entfernten Vorrichtung und bewirkt, dass die entfernte Vorrichtung mindestens eine Energiesparfunktion aktiviert.

Aus DE 10 2008 011 279 A1 ist ein elektrisches Gerät mit einer abschaltbaren Stromversorgungseinrichtung bekannt. Dieses zeichnet sich dadurch aus, dass die Stromversorgungseinrichtung, veranlasst durch eine Bedienungshandlung oder durch einen geräteinternen Steuervorgang, aus einem Hard-Off-Modus in einen On-Modus und von dem On-Modus in den Hard-Off-Modus versetzbar ist, wobei das elektrische Gerät dazu eingerichtet ist, eine dazu vorgesehene Steuereinrichtung im Hard-Off-Modus unabhängig von einem Stromversorgungsnetz zu betreiben. Eine Lösung der Aufgabe gelingt mittels eines Verfahrens bzw. mittels eines Automatisierungssystems nach einem der Ansprüche 1 bis 9.

Im Bereich der Automatisierung werden beispielsweise Ethernet basierte Datenbusse eingesetzt. Bei derartigen Datenkommunikationsanwendungen lässt sich ein "Wakeup on LAN" realisieren (diese ist eine Aufweckfunktionalität für ein Gerät, welches einen LAN-Anschluss aufweist, wobei das Aufwecken beispielsweise das Verlassen einer "Schlaf-Funktion" bedeutet. Das "Aufwecken" eines Gerätes kann beispielsweise mittels einer Standby-Funktionalität erreicht werden.

Bei einem Verfahren zum Betrieb eines Automatisierungssystems, wobei das Automatisierungssystem ein Kommunikationsnetz aufweist, wobei das Kommunikationsnetz eine Vielzahl von Knoten aufweist, wobei ein erster Knoten mit einem zweiten Knoten datentechnisch verbunden ist, bewirkt der erste Knoten eine Aktivierung und/oder eine Deaktivierung des zweiten Knoten.

Das Automatisierungssystem weist beispielsweise eine speicherprogrammierbare Steuerung (SPS), einen Stromrichter, eine Bewegungssteuerung, ein Mensch-Maschine-Interface, usw. auf. Diese Teile des Automatisierungssystems können mittels des Kommunikationsnetzes datentechnisch miteinander verknüpft sein. Die speicherprogrammierbare Steuerung (SPS), der Stromrichter, die Bewegungssteuerung, das Mensch-Maschine-Interface und dergleichen können dabei als Knoten des Kommunikationsnetzes betrachtet werden.

Wenn nun ein erster Knoten einen zweiten Knoten aktivieren bzw. deaktivieren kann, so kann die Größe des Netzwerkes aktiv beeinflusst werden.

Je größer das Netzwerk ist, desto größer ist der potentielle Energieverbrauch. Wenn zumindest ein Teil des Netzwerkes deaktiviert werden kann, so lässt sich der Energieverbrauch senken.

In einer Ausgestaltung des Verfahrens versorgt der erste Knoten eine Kommunikationselektronik des zweiten Knotens mit elektrischer Energie. Damit kann der erste Knoten beeinflussen, ob die Kommunikation des zweiten Knoten aktiv ist. Nur wenn die Kommunikationselektronik des zweiten Knoten mit Energie versorgt wird, kann dieser Daten empfangen oder senden. Wenn die Kommunikationselektronik des zweiten Knotens durch den ersten Knoten aktiviert ist, kann der zweite Knoten beispielsweise ein Einschaltsignal empfangen. Nach dem Betrieb des zweiten Knotens kann dieser beispielsweise dann ein Ausschaltsignal empfangen, wenn die Funktion des zweiten Knotens nicht mehr benötigt wird. Nachdem sich der zweite Knoten nach Empfang des Ausschaltsignals ausgeschalten hat, kann der erste Knoten die Energieversorgung der Kommunikationselektronik des zweiten Knotens z.B. unterbrechen.

In einer Ausgestaltung des Verfahrens wird die Kommunikationselektronik des zweiten Knotens zeitlich begrenzt vom ersten Knoten mit elektrischer Energie versorgt. Diese Energieversorgung durch den ersten Knoten wird von einer Energieversorgung des zweiten Knotens abgelöst. Eine Energiequelle des zweiten Knotens übernimmt die Energieversorgung der Kommunikationselektronik des zweiten Knotens. Insbesondere dann, wenn der erste Knoten die Kommunikationselektronik des zweiten Knotens nicht mehr mit elektrischer Energie versorgt, wird die Energieversorgung vom zweiten Knoten selbst übernommen.

In einer Ausgestaltung des Verfahrens weist das Kommunikationsnetz einen ersten Strang und einen zweiten Strang auf, wobei der erste Knoten Teil des ersten Stranges ist, wobei der zweite Knoten Teil des zweiten Stranges ist, wobei der erste Knoten eine Aktivierung und/oder eine Deaktivierung den zweiten Knoten betreffend bewirkt, wobei insbesondere der erste Knoten eine Kommunikationselektronik oder einen Schalter des zweiten Knotens mit elektrischer Energie versorgt. Damit können sich Knoten unterschiedlicher Stränge gegenseitig beeinflussen. Eine starre Netzstruktur bezüglich der Aktivierung und Deaktivierung von Knoten ist so aufgebrochen.

In einer Ausgestaltung des Verfahrens betrifft die Aktivierung und/oder Deaktivierung des zweiten Knotens durch den ersten Knoten eine Standby-Funktionalität des zweiten Knotens. Vorteilhaft kann dadurch beispielsweise der zweite Knoten in einer Standby-Funktion derart betrieben werden, dass der zweite Knoten keine elektrische Energie verbraucht. Der erste Knoten kann den zweiten Knoten durch die Energieversorgung über den ersten Knoten wecken.

In einer Ausgestaltung des Verfahrens erfolgt die Aktivierung und/oder Deaktivierung befehlsgesteuert. Der Befehl kann beispielsweise von einer übergeordneten Steuerung und/oder Regelung an den ersten Knoten übermittelt werden. Der erste Knoten aktiviert oder deaktiviert dann den zweiten Knoten mittels der Aktivierung bzw. Deaktivierung der Energieversorgung für den zweiten Knoten.

In einer Ausgestaltung des Verfahrens wird mittels der elektrischen Energie des ersten Knotens ein Schalter zur Versorgung des zweiten Knotens mit elektrischer Energie geschalten. Dies kann beispielsweise den Vorteil haben, dass der erste Knoten nicht die gesamte Energie die zum Betrieb des zweiten Knotens notwendig ist aufbringen muss. Der erste Knoten kann also nur zur Initiierung der Energieversorgung bzw. Energieabkoppelung des zweiten Knotens verwendet werden.

In einer Ausgestaltung des Verfahrens erhält ein vierter Knoten elektrische Energie vom zweiten Knoten, wobei zwischen dem zweiten Knoten und dem vierten Knoten ein dritter Knoten ist. Dadurch lassen sich Knoten überspringen, welche eigentlich in einem Kommunikationsstrang nachfolgend angeordnet sind. Derart lässt sich die Flexibilität des Systems erhöhen.

In einer Ausgestaltung des Verfahrens wird elektrische Energie vom ersten Knoten zu einem weiteren, insbesondere dem zweiten, bzw. vierten Knoten mittels eines Ethernet-Kabels übertragen. Das Ethernet-Kabel ist ein Kabel, welches für eine Ethernetverbindung zwischen zwei Knoten verwendet werden kann. Das Ethernet-Kabel weist dabei Adern auf, welche einer Stromversorgung dienen. Derartige Adern können auch in Kabel integriert sein, welche dem Ethernet-Standard nicht entsprechen jedoch auch zur Datenübertragung nutzbar sind.

In einer Ausgestaltung des Verfahrens weist das Kommunikationsnetz einen Hauptstrang, einen ersten Nebenstrang und einen zweiten Nebenstrang aufweist. Dabei ist vorteilhaft ein Knoten eines Nebenstrangs auch ein Knoten des Hauptstrangs. Gemäß der beanspruchten Erfindung sind Knoten in einem Hauptstrang und/oder in einem Nebenstrang in einer Reihenfolge angeordnet, welche einer Hochlaufreihenfolge entspricht. Ein sequentieller Hochlauf kann unter Umständen zu einem langsameren Systemhochlauf führen.

In einer Ausgestaltung des Verfahrens erfolgt eine Aktivierung des zweiten Knotens mittels einer Energieübertragung vom ersten Knoten zum zweiten Knoten, wobei die Energie über ein ethernetfähiges Kabel erfolgt, wobei die datentechnische Verbindung zwischen dem ersten Knoten und dem zweiten Knoten nach und/oder mit der Energieübertragung erfolgt.

In einer Ausgestaltung des Verfahrens werden Knoten des Kommunikationsnetzes des Automatisierungssystems in einer bestimmten Reihenfolge aktiviert, wobei die Reihenfolge abgeändert werden kann, wobei die Abänderung insbesondere mittels einer Programmänderung in einer übergeordneten Steuerung und/oder Regelung erfolgt.

Ein Automatisierungssystem weist beispielsweise eine Vielzahl von Knoten auf, wobei ein erster Knoten eine Energiequelle für einen zweiten Knoten ist, wobei der zweite Knoten über einen Schalter mit einer weiteren Energiequelle verbindbar ist, wobei mittels der Energiequelle des ersten Knotens der Schalter ansteuerbar ist, wobei ein Kabel zwischen dem ersten Knoten und dem zweiten Knoten vorgesehen ist, mittels dessen sowohl elektrische Energie wie auch Daten vom ersten Knoten zum zweiten Knoten übertragen werden können.

Ein derart ausgebildetes Automatisierungssystem kann zur Durchführung der beschriebenen Verfahren herangezogen werden.

Beispielhafte Ausgestaltungen der Erfindung ergeben sich gemäß den dargestellten und beschriebenen Figuren 1 bis 5, wobei diese die Erfindung nicht einschränkend beschreiben. Dabei zeigt:
- FIG 1: ein Server-Client-Netzwerk;
- FIG 2: ein Automatisierungsnetzwerk;
- FIG 3: eine erste Netzwerkstruktur mit Teilsegmenten;
- FIG 4: eine weitere Netzwerkstruktur mit Teilsegmenten; und
- FIG 5: eine Automatisierungseinrichtung.

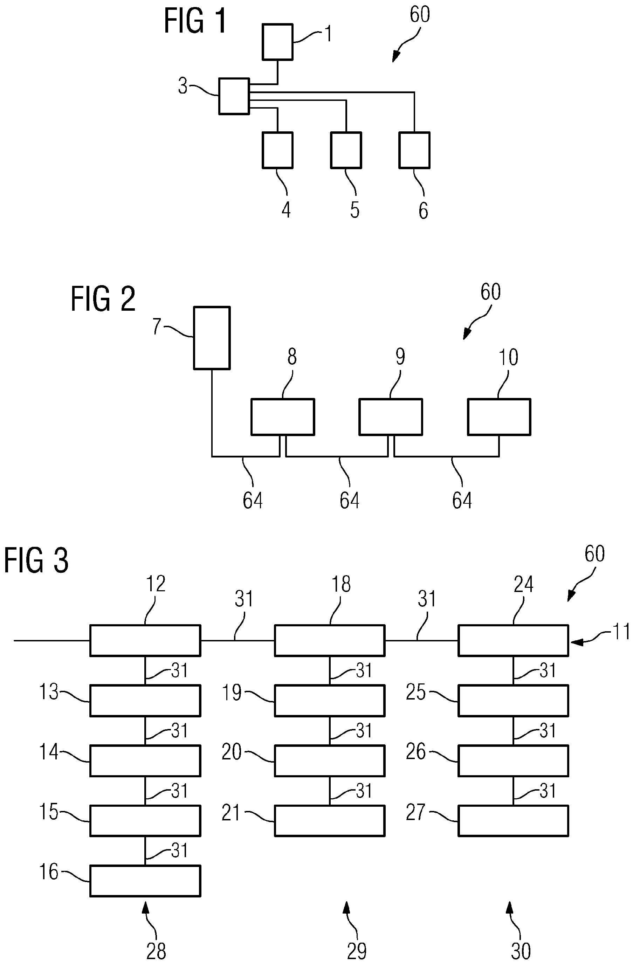

Die Darstellung gemäß FIG 1 zeigt eine mögliche Ausgestaltung eines Automatisierungssystems 60. Das Automatisierungssystem 60 weist einen Server 1, einen Switch 3 und Clients 4, 5 und 6 auf. Der Server 1 kann in einen Standby-Modus geschalten werden, um Energie zu sparen, wenn der Server nicht benötigt wird. Sobald ein Client 4, 5, 6 eine Anfrage an den Server 1 stellt, meldet eine Ethernet-Karte oder eine andere Netzwerk-Karte per Interrupt, dass ein Telegramm eingegangen ist. Der Server kann daraufhin seinen Standby-Modus beenden und ist zur Weiterarbeit bereit. Dieser Mechanismus kann als "Wakeup on LAN" (WoL) bezeichnet werden. Auch bei einem PC oder einer Steuerung kann eine "Wakeup on LAN" Funktionalität implementiert werden. Das Verfahren kann implizieren, dass eine gewisse Grundfunktionalität des LAN-Anschlusses aktiv ist. Darüber hinaus ist eine Integration der Switch-Funktionalität zu gewährleisten.

Die Darstellung gemäß FIG 2 zeigt ein Automatisierungssystem 60, welches eine speicherprogrammierbare Steuerung (SPS) 7, ein erstes I/O-Gerät 8 zur Ausgabe bzw. Eingabe von Daten, ein zweites I/O-Gerät 9 zur Ausgabe bzw. Eingabe von Daten und ein Bediengerät 10 aufweist. Es ist ein relativ flaches Netz dargestellt. Die Geräte 7, 8, 9 und 10 sind Teilnehmer in einem Feldbus 64. Der Feldbus 64 stellt ein Kommunikationsnetz dar. Dabei enthält jedes Gerät einen Zwei-Port-Switch, um die Linie fortzuführen. Für den Betrieb muss sichergestellt sein, dass jedes aktive Peripheriegerät über eine dauerhafte Verbindung zur SPS 7 verfügt. Hier handelt es sich nur um ein Beispiel, die reale Struktur richtet sich nach den Anlagengegebenheiten. Bei Profibus® können mehrere Stränge benutzt werden. Mittels Repeater ist eine Auffächerung in verschiedene Anlagensegmente möglich. Vorteilhaft ist eine Funktion vorzusehen, um Teilsegmente abzuschalten, da auch die Automatisierungsanlagen strukturiert aufgebaut sind. Das Abschalten von Teilsegmenten ist z.B. auch aus der Sicherheitstechnik heraus gefordert. Nur wenn eine Anlage strukturiert (als Linie mit Abzweigen) aufgebaut ist, kann diese Abschaltung sinnvoll erfolgen. Beim Abschalten eines Teilsegmentes aber auch zur Überbrückung von Fehlern kann man z.B. manuell eingreifen. Über Notaus-Funktionen kann dies teilweise angeboten werden.

Werden alle oder zu viele Komponenten eines Automatisierungssystems gleichzeitig hochgefahren, so kann dies unter Umständen kritisch sein, da hierbei viel Strom benötigt werden könnte, so dass eine Überdimensionierung der Stromversorgungen nötig ist.

Die Darstellung gemäß FIG 3 illustriert eine Struktur eines Kommunikationsnetzes eines Automatisierungssystems 60. Mehrere Elemente 12, 18 und 24 einer Maschine, welche Knoten des Kommunikationsnetzes darstellen, sind durch einen Hauptstrang 11 miteinander verbunden. Segmente 13-16, 19-21 und 25-27, welche auch Knoten des Kommunikationsnetzes darstellen, gehören nicht selbst zum Hauptstrang 11. Diese Segmente 13-16, 19-21 und 25-27 können beispielsweise manuell abgeschaltet werden. Die Knoten 13-16, 19-21 und 25-27 bilden gemäß FIG 3 drei Nebenstränge 28-30 aus. Die Knoten sind über Kommunikationsverbindungen 31 miteinander verbunden. Ein Beispiele für Kommunikationsverbindungen sind: ein Ethernetkabel, ein Feldbuskabel, usw.

Ein erster Nebenstrang 28 weist die Knoten 13-16 auf. Ein zweiter Nebenstrang 29 weist die Knoten 19-21 auf. Ein dritter Nebenstrang 30 weist die Knoten 25-27 auf. Mittels eines Knotens 12, 18 und 24 kann vorteilhaft ein gesamter Nebenstrang 28-30 automatisch zugeschaltet oder abgeschaltet werden, abhängig davon, ob eine Funktion des entsprechenden Stranges benötigt wird oder nicht. Gemäß der Anordnung kann beispielsweise ein kompletter Nebenstrang 28-30 aus dem Netz genommen oder in dieses integriert werden oder es können auch einzelne Knoten temporär abgeschaltet werden. Eine temporäre Abschaltung könnte z.B. auf Grund von Wartungsarbeiten an diesem Knoten notwendig sein. Ein Abschalten eines Linienknotens 12, 18 und 24 kann bei Ethernet mit integrierten Switches zum Ausfall nachfolgender (stromloser) Knoten führen. Ein redundantes System kann hier jedoch Abhilfe schaffen.

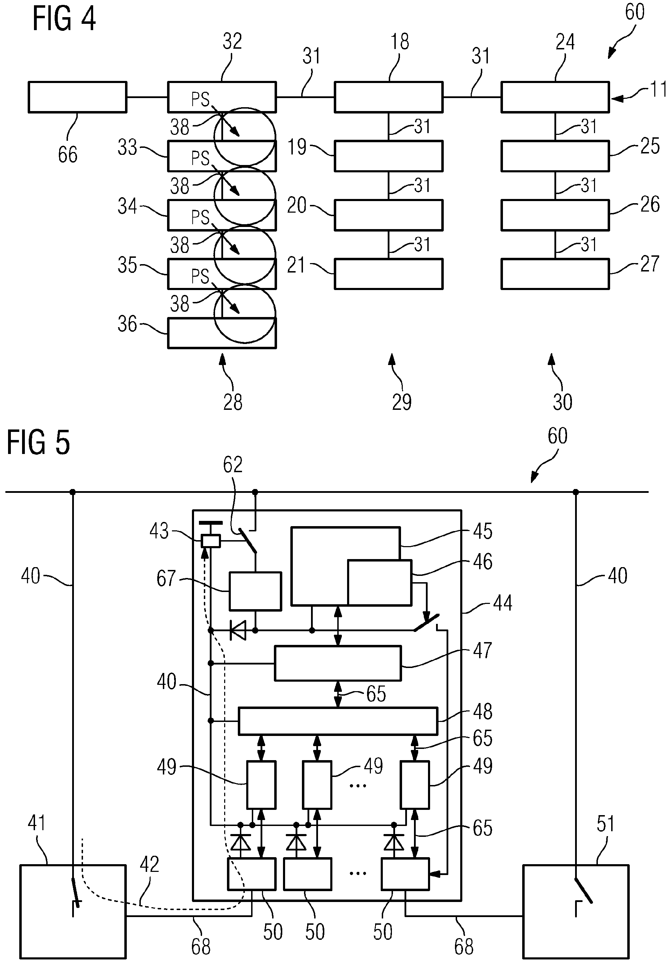

Die Darstellung gemäß FIG 4 illustriert eine Struktur eines Kommunikationsnetzes eines Automatisierungssystems 60. Mehrere Elemente 32, 18 und 24 einer Maschine, welche Knoten des Kommunikationsnetzes darstellen, sind durch einen Hauptstrang 11 miteinander verbunden. Segmente 33-36, 19-21 und 25-27, welche auch Knoten des Kommunikationsnetzes darstellen, gehören nicht selbst zum Hauptstrang 11. Die Knoten 33-36 sind derart miteinander gekoppelt, dass ein Knoten 32 elektrische Energie für einen anderen Knoten 33 bereithält. Nach dem Beispiel in FIG 4 weist der Knoten 32 eine elektrische Energieversorgung (Power Supply (PS)) für den Knoten 33 auf. Der Knoten 33 weist eine elektrische Energieversorgung für den Knoten 34 auf. Der Knoten 34 weist eine elektrische Energieversorgung für den Knoten 35 auf. Der Knoten 35 weist eine elektrische Energieversorgung für den Knoten 36 auf. Dies ist jeweils durch einen Pfeil und einen Kreis 38 graphisch dargestellt. Die Knoten 18-21 bzw. 24-27 könnten entsprechend ausgestaltet sein.

Der Hauptzweig 11 nach FIG 4 weist neben den Knoten 32, 18 und 24 auch den Knoten 66 auf. Der Knoten 66 stellt beispielsweise eine übergeordnete Steuerung und/oder Regelung dar.

In einer derartigen Struktur der gegenseitigen Energieversorgung der Knoten kann ein Automatisierungssystem bzw. eine entsprechende Anlage vorteilhaft so strukturiert werden, dass in einem Zweig die relevanten Knoten in möglichst richtiger Folge angeordnet werden. Das heißt, wenn ein erster Knoten für den Hochlauf eines zweiten Knotens erforderlich ist, so sollte der erste Knoten vor dem zweiten Knoten angeordnet sein.

Wenn ein Knoten die (Kommunikations-)Elektronik seines Nachbarknotens versorgt, kann ein Knoten nach dem anderen "Aufgeweckt" und in Betrieb genommen werden. Durch einen derartigen zwangsweise sequentiellen Hochlauf kann auch ein Inrush Strom reduziert werden. Dabei kann ein Einschalten bzw. Ausschalten der Stromversorgung in Bezug auf einen Nachbarknoten befehlsgesteuert erfolgen. Damit kann z.B. in gewissen Betriebssituationen eine Teilanlage stillgelegt werden.

Für den Fall, dass ein Knoten seinen eigenen Strom nicht aufbringen kann, könnte der benötigte Strom vom Vorgängerknoten genutzt werden. Dies müsste per Kommunikation mit dem Vorgängerknoten ausgehandelt werden. Damit wäre ein Ausfall der eigenen Stromquelle für einen Knoten überbrückbar.

Die Darstellung gemäß FIG 5 zeigt ein weiteres Automatisierungssystem 60. Das Automatisierungssystem weist Automatisierungseinrichtungen 41, 44 und 51 auf, wobei diese Knoten eines Kommunikationsnetzes sind. Die Automatisierungseinrichtungen 41, 44 und 51 werden über Stromleitungen 40 mit elektrischer Energie versorgt. Die Automatisierungseinrichtungen 41, 44 und 51 weisen Schalter 62 zum Zuschalten bzw. zum Abschalten der Energieversorgung auf. In der Automatisierungseinrichtung 44 ist ein Relais 43 zur Betätigung des Schalters 62 dargestellt. Über einen Energiepfad 42 kann das Relais 43 angesprochen werden. Der Energiepfad 42 ist über die Automatisierungseinrichtung 41 geschleift. Die Automatisierungseinrichtung 44 weist eine Spannungsversorgung 67 auf, welche über den Schalter 62 mit einer Stromleitung 40 verbunden werden kann. Die Spannungsversorgung 67 versorgt Komponenten wie einen Kommunikationsprozessor 47 oder einen Daten-Switch 48 mit elektrischer Energie. Neben diesen Komponenten weist die Automatisierungseinrichtung auch noch folgende Komponenten auf: einen Prozessor 45 zur Abarbeitung von Anwendungsbefehlen, eine HW und/oder SW zum Energiemanagement 46, Bausteine mit der MAC-Adresse (MAC PHY) 49 und eine Vielzahl von Dioden. Die Automatisierungseinrichtungen weist ferner Datenkommunikationsleitungen 65 und Stromleitungen 40 auf. Die Automatisierungseinrichtung 41 ist mit der Automatisierungseinrichtung 44 über ein Kommunikationskabel 68 verbunden. Mittels dieses Kommunikationskabels 68, welches beispielsweise ein Ethernetkabel ist, lässt sich die Automatisierungseinrichtung 44 auch mit elektrischer Energie versorgen. Vorteilhaft ist auch ein "Nullpower Standby" für ein ethernetbasierte Automatisierungssystem realisierbar. Damit ist eine Aktivierung/Aufwecken bei einer vollständigen Abschaltung Automatisierungseinrichtung erreichbar. Dies könnte auch bei Anwendungen z.B. im Bereich der Medizin Vorteile bringen, weil es mit diesem Verfahren möglich ist, ganze Anlagen- und Netzwerkteile komplett energiefrei zu schalten, so dass z.B. bei CT-Messungen Störquellen sicher ausgeschaltet werden können. Die Umsetzung der Idee erlaubt eine Verwendung auch bei anderen Busprotokollen und nicht nur bei Ethernet.

Gemäß der in FIG 5 dargestellten prinzipiellen Ausführungsform eines Automatisierungssystems bzw. einer Automatisierungseinrichtung 44 werden Ethernet Ports um jeweils ein PoE-Frontend ergänzt. Das PoE-Frontend kann sowohl Energie von einem externen Gerät 42 empfangen und in Stromversorgungsenergie für den eigenen Kommunikationsteil 47, 48, 49 und das Energiemanagement 46 der Automatisierungseinrichtung 44 umsetzen, also auch auf Wunsch des Energiemanagements 46 der Automatisierungseinrichtung 44, Energie aus der geräteeigenen Spannungsversorgung 67 (Power Supply) auf die Ethernet Leitung schalten, um damit externe schlafende Automatisierungseinrichtungen zu wecken oder deren Energieversorgung zu stützen. Die Weckenergie kann vorteilhaft über jeden Port in das schlafende Gerät (die Automatisierungseinrichtung 44) gelangen. Damit kann der Kommunikationsteil, das Energiemanagement oder eine andere wichtige Komponente der Automatisierungseinrichtung zum Start mit elektrischer Energie versorgt werden. Wenn nur sehr geringe Weckenergien übertragen werden sollen, ist vorteilhaft eine Verbindung von der externen Netzenergie zur internen (oder auch externen) Spannungsversorgung herzustellen (Bootstrap). Mit der Aktivierung der Spannungsversorgung steht dann ein ausreichendes Energiepotential für die Automatisierungseinrichtung 44 zur Verfügung, um deren internen Prozesse zu starten und/oder weitere externe Gerät zu wecken bzw. zu stützen.

Da für das "Wecken" die Übertragung der Weckenergie nicht notwendigerweise gleichzeitig mit der Kommunikation über diesen Ethernet Link erforderlich ist, sind auch andere Verfahren als PoE zur Energieübertragung möglich, wobei zunächst die Energie übertragen wird, um einen Energiespeicher in einer zu weckenden Automatisierungseinrichtung (Automation Device) zu füllen oder die Spannungsversorgung 41 einzuschalten, wobei danach die Energieübertragung gestoppt und auf Kommunikation umgeschaltet wird.

Bei der Verwendung von PoE's 50 kann ein "Notstromkonzept" mit realisiert werden. Da alle bzw. ein Vielzahl von Ethernet Ports der Automatisierungseinrichtung 44 die PoE-Funktionalität haben, kann bei einem Ausfall der lokalen Spannungsversorgung 67 einer Automatisierungseinrichtung 44 (z.B. durch internen Fehler in der Spannungsversorgung 67 oder durch externe Unterbrechung) die ganze "fehlerhafte" Automatisierungseinrichtung 44 oder zumindest ein Kommunikationsteil 47 48, 49 (für den Bestand der Netzwerkkommunikation auch zu anderen Devices bedeutend) durch die benachbarten Automatisierungseinrichtungen 41, 51, welche vorteilhafter Weise eine funktionsfähige Spannungsversorgung aufweisen, über die PoE's mit versorgt werden. Auf diese Weise kann das gesamte Automatisierungssystem bzw. insbesondere die Netzwerkkommunikation erheblich robuster werden gegenüber Fehlern in Spannungsversorgungsteilen. Bei ethernetbasierten Systemen könnte der Ausfall der Spannungsversorgung der Switches auch zum Ausfall der Kommunikation zu ganzen Netzabschnitten führen, wobei nun durch die Versorgung der Automatisierungseinrichtung 44 mit Energie über Kommunikationsanschlüsse ein Beitrag zur Erhöhung der Verfügbarkeit des Gesamtsystems geliefert werden kann.

Ein Automatisierungssystem kann also eine Vielzahl von Automatisierungseinrichtungen 41, 44 und 51 aufweisen. Die Automatisierungseinrichtungen sind Knoten eines Kommunikationssystems (-Netzwerkes), wobei eine Automatisierungseinrichtung 44 von zumindest zwei weiteren Automatisierungseinrichtungen 41, 51 mittels Kommunikationsschnittstellen 50 mit elektrischer Energie versorgt wird. Kommunikationsschnittstellen sich beispielsweise Anschlüsse für Ethernetkabel, wobei die Automatisierungseinrichtung beispielsweise eine speicherprogrammierbare Steuerung (SPS), eine I/O-Schnittstelle, oder dergleichen ist. Vorteilhaft erfolgt die Energieversorgung über Kommunikationskabel bei Ausfall einer separaten Energieversorgung über Stromversorgungskabel, welche von einem Kommunikationskabel separiert sind.

Um ein Durchschalten der Energie bei Ausfall der lokalen Spannungsversorgung 67 sowie die Anbindung von lokalen Elementen, die dann an einer anderen Stromversorgungen hängen, zu verbessern, bietet sich die Verwendung von LVDS als Koppelungsphysik an.

Ein mit Ethernet Technologie vernetztes Automatisierungssystem kann in einen 100% leistungslosen Standby Zustand versetzt werden, obwohl der Transport von Information (Weckruf) über Ethernet normalerweise eine aktive Kommunikationsinfrastruktur (Phy, Switch, MAC) voraussetzt. Der "Weckruf" über das Ethernet braucht wie beschrieben kein Kommunikationstelegramm aufweisen, der "Weckruf" besteht vorteilhaft aus elektrischer Energie, d.h. aus einer elektrischen Energieversorgung für die zu weckende Automatisierungseinrichtung 44. Die elektrische Energie wird vorteilhaft temporär über das Standardethernetkabel zum schlafenden Gerät 44 übertragen, damit dieses aus einem "Zero Power Sleep" geweckt wird. Über ein Bootstrap Verfahren kann dann die Hauptenergieversorgung 67 des Gerätes aktiviert werden. Das geweckte Gerät weckt dann nach demselben Verfahren z.B. weitere andere "schlafende" Geräte (Automatisierungseinrichtungen) auf.

Mit den beschriebenen Lösungsansätzen kann "Power over Ethernet" energieeffizient ausgestaltet werden. Das Ethernet ist dabei nur ein Beispiel, auch andere spezielle Kommunikationsverfahren und entsprechende Kabel mit separaten Stromversorgungsarten oder Verfahren sind denkbar.

Neben der Energieeffizienz und der Verfügbarkeit kann man auch ein deutlich verbessertes Einschaltverhalten des Automatisierungssystems erzielen, da nicht alle Automatisierungseinrichtungen 41, 44 und 51 gleichzeitig hochlaufen können, sondern bedingt durch das "Aufweckverfahren" nur nacheinander. Weiterhin kann der PoE-Ansatz auch als "Notstromversorgung" für mindestens den Kommunikationsteil einer Automatisierungseinrichtung verwendet werden und damit die allgemeine Verfügbarkeit von Ethernet basierten Automatisierungssystemen verbessern. Darüber hinaus bietet sich die Möglichkeit, einzelne Knoten von der Netzenergie wegzuschalten, ohne die ganze Linie zu unterbrechen. Damit kann man die Verfügbarkeit von Ethernet deutlich verbessern, ohne zusätzlichen Kosten in Verkabelung, Projektierung und Ressourcen zu haben.

## Patentansprüche

1. Verfahren zum Betrieb eines Automatisierungssystems (60), wobei das Automatisierungssystem (60) ein Kommunikationsnetz aufweist, wobei das Kommunikationsnetz eine Vielzahl von Knoten (1, 3-10, 12-16, 18-21, 24-27, 32-36, 41,44,51) aufweist, wobei ein erster Knoten (33,41) mit einem zweiten Knoten (34, 44) datentechnisch verbunden ist, wobei der erste Knoten (33, 41) eine Aktivierung und/oder eine Deaktivierung den zweiten Knoten (34,44) betreffend bewirkt,
**dadurch gekennzeichnet, dass** ein Hauptstrang (11) einen ersten Nebenstrang und einen zweiten Nebenstrang (28,29,30) aufweist, dass Knoten (12, 18, 24, 32) im Hauptstrang (11) und in Nebensträngen (13-16, 19-21, 25-27, 33-36) in einer Reihenfolge angeordnet sind, welche einer Hochlaufreihenfolge entsprechen, und dass der erste Knoten (33,41) eine Kommunikationselektronik des zweiten Knotens (34,44) mit elektrischer Energie versorgt.

2. Verfahren nach Anspruch 1, wobei die Kommunikationselektronik des zweiten Knotens (34,44) zeitlich begrenzt vom ersten Knoten (33,41) mit elektrischer Energie versorgt wird und eine Energiequelle des zweiten Knotens (34,44) die Energieversorgung der Kommunikationselektronik des zweiten Knotens (34, 44) übernimmt, wenn der erste Knoten (33,41) die Kommunikationselektronik des zweiten Knotens (34,44) nicht mehr mit elektrischer Energie versorgt.

3. Verfahren nach einem der Ansprüche 1 oder 3, wobei die Aktivierung und/oder Deaktivierung eine Standby-Funktionalität des zweiten Knotens (34,44) betrifft.

4. Verfahren nach einem der Ansprüche 1 bis 3, wobei die Aktivierung und/oder Deaktivierung befehlsgesteuert erfolgt.

5. Verfahren nach einem der Ansprüche 1 bis 4, wobei mittels der elektrischen Energie des ersten Knotens (33,41) ein Schalter zur Versorgung des zweiten Knotens (34,44) mit elektrischer Energie geschalten wird.

6. Verfahren nach einem der Ansprüche 1 bis 5, wobei elektrische Energie zwischen Knoten mittels eines Ethernet-Kabels übertragen wird.

7. Verfahren nach einem der Ansprüche 1 bis 6, wobei eine Aktivierung des zweiten Knotens mittels einer Energieübertragung vom ersten Knoten (33,41) zum zweiten Knoten (34,44) erfolgt, wobei die Energie über ein ethernetfähiges Kabel erfolgt, wobei die datentechnische Verbindung zwischen dem ersten Knoten (33,41) und dem zweiten Knoten (34,44) nach und/oder mit der Energieübertragung erfolgt.

8. Verfahren nach einem der Ansprüche 1 bis 7, wobei Knoten eines Kommunikationsnetzes des Automatisierungssystems in einer bestimmten Reihenfolge aktiviert werden, wobei die Reihenfolge von einer übergeordneten Steuerung und/oder Regelung (66) vorgegeben wird und dort auch geändert werden kann.

9. Automatisierungssystem (60), wobei das Automatisierungssystem (60) ein Kommunikationsnetz aufweist, wobei das Kommunikationsnetz eine Vielzahl von Knoten (1, 3-10, 12-16, 18-21, 24-27, 32-36, 41, 44, 51) aufweist, wobei ein erster Knoten (33, 41) mit einem zweiten Knoten (34, 44) datentechnisch verbunden ist, wobei der erste Knoten (33, 41) eine Aktivierung und/oder eine Deaktivierung den zweiten Knoten (34, 44) betreffend bewirkt,
**dadurch gekennzeichnet, dass**
ein Hauptstrang (11) einen ersten Nebenstrang und einen zweiten Nebenstrang (28, 29, 30) aufweist, dass Knoten (12, 18, 24, 32) im Hauptstrang (11) und in Nebensträngen (13-16, 19-21, 25-27, 33-36) in einer Reihen-folge angeordnet sind, welche einer Hochlaufreihenfolge entsprechen, und dass der erste Knoten (33, 41) konfiguriert ist eine Kommunikationselektronik des zweiten Knotens (34, 44) mit elektrischer Energie zu versorgen.

## Claims

1. Method for operating an automation system (60), wherein the automation system (60) has a communication network, wherein the communication network has a multiplicity of nodes (1, 3-10, 12-16, 18-21, 24-27, 32-36, 41, 44, 51), wherein a first node (33, 41) is connected to a second node (34, 44) using data technology, wherein the first node (33, 41) activates and/or deactivates the second node (34, 44), **characterized in that** a main line (11) has a first secondary line and a second secondary line (28, 29, 30), **in that** nodes (12, 18, 24, 32) in the main line (11) and in secondary lines (13-16, 19-21, 25-27, 33-36) are arranged in an order corresponding to a start-up order, and **in that** the first node (33, 41) supplies communication electronics of the second node (34, 44) with electrical energy.

2. Method according to Claim 1, wherein the communication electronics of the second node (34, 44) are supplied with electrical energy by the first node (33, 41) for a limited time, and an energy source of the second node (34, 44) supplies the communication electronics of the second node (34, 44) with energy if the first node (33, 41) no longer supplies the communication electronics of the second node (34, 44) with electrical energy.

3. Method according to either of Claims 1 and 3, wherein the activation and/or deactivation relates to a standby functionality of the second node (34, 44).

4. Method according to one of Claims 1 to 3, wherein the activation and/or deactivation is/are carried out in a command-controlled manner.

5. Method according to one of Claims 1 to 4, wherein a switch for supplying the second node (34, 44) with electrical energy is switched by means of the electrical energy from the first node (33, 41).

6. Method according to one of Claims 1 to 5, wherein electrical energy is transmitted between nodes by means of an Ethernet cable.

7. Method according to one of Claims 1 to 6, wherein the second node is activated by transmitting energy from the first node (33, 41) to the second node (34, 44), wherein the energy is effected via an Ethernet-capable cable, wherein the data connection between the first node (33, 41) and the second node (34, 44) is effected after and/or with the transmission of energy.

8. Method according to one of Claims 1 to 7, wherein nodes in a communication network of the automation system are activated in a particular order, wherein the order is specified by a superordinate open-loop controller and/or closed-loop controller (66) and can also be changed there.

9. Automation system (60), wherein the automation system (60) has a communication network, wherein the communication network has a multiplicity of nodes (1, 3-10, 12-16, 18-21, 24-27, 32-36, 41, 44, 51), wherein a first node (33, 41) is connected to a second node (34, 44) using data technology, wherein the first node (33, 41) activates and/or deactivates the second node (34, 44),
**characterized in that**
a main line (11) has a first secondary line and a second secondary line (28, 29, 30), **in that** nodes (12, 18, 24, 32) in the main line (11) and in secondary lines (13-16, 19-21, 25-27, 33-36) are arranged in an order corresponding to a start-up order, and **in that** the first node (33, 41) is configured to supply communication electronics of the second node (34, 44) with electrical energy.

## Revendications

1. Procédé pour faire fonctionner un système (60) d'automatisation, le système (60) d'automatisation ayant un réseau de communication, le réseau de communication ayant une pluralité de nœuds (1, 3 à 10, 12 à 16, 18 à 21, 24 à 27, 32 à 36, 41, 44, 51), un premier nœud (33, 41) étant relié en technique des données à un deuxième nœud (34, 44), le première nœud (33, 41) provoquant, comme il convient, une activation et/ou une désactivation du deuxième nœud (34, 44),
**caractérisé en ce qu'**une branche (11) principale a une première branche secondaire et une deuxième branche (28, 29, 30) secondaire, **en ce que** des nœuds (12, 18, 24, 32) de la branche (11) principale et des branches 13 à 16, 19 à 21, 25 à 27, 33 à 36) secondaires sont disposées suivant un ordre, qui correspond à un ordre à pleine vitesse et **en ce que** le premier nœud (33, 41) alimente en énergie électrique une électronique de communication du deuxième nœud (34, 44).

2. Procédé suivant la revendication 1, dans lequel l'électronique de communication du deuxième nœud (34, 44) est alimentée, d'une manière limitée dans le temps, en énergie électrique par le premier nœud (33, 41) et une source d'énergie du deuxième nœud (34, 44) prend en charge l'alimentation en énergie de l'électronique de communication du deuxième nœud (34, 44) lorsque le premier nœud (33, 41) n'alimente plus en énergie électrique l'électronique de communication du deuxième nœud (34, 44).

3. Procédé suivant l'une des revendications 1 ou 3, dans lequel l'activation et/ou la désactivation concerne une fonctionnalité standby du deuxième nœud (34, 44).

4. Procédé suivant l'une des revendications 1 à 3, dans lequel l'activation et/ou la désactivation s'effectue en étant commandée par instruction.

5. Procédé suivant l'une des revendications 1 à 4, dans lequel, au moyen de l'énergie électrique du premier nœud (33, 41), on ferme un interrupteur d'alimentation du deuxième nœud (33, 44) en énergie électrique.

6. Procédé suivant l'une des revendications 1 à 5, dans lequel on transmet de l'énergie électrique entre les nœuds au moyen d'un câble Ethernet.

7. Procédé suivant l'une des revendications 1 à 6, dans lequel une activation du deuxième nœud s'effectue au moyen d'une transmission d'énergie du premier nœud (33, 41) au deuxième nœud (34, 44), l'énergie se produisant par un câble apte à l'Ethernet, la liaison en technique de données entre le premier nœud (33, 41) et le deuxième nœud (34, 44) s'effectuant après et/ou avec la transmission d'énergie.

8. Procédé suivant l'une des revendications 1 à 7, dans lequel on active des nœuds d'un réseau de communication du système d'automatisation dans un ordre déterminé, l'ordre pouvant être prescrit par une commande et/ou une régulation supérieure hiérarchiquement et pouvant y être aussi modifié.

9. Système (60) d'automatisation, le système (60) d'automatisation ayant un réseau de communication, le réseau de communication ayant une pluralité de nœuds (1, 3 à 10, 12 à 16, 18 à 21, 24 à 27, 32 à 36, 41, 44, 51), un premier nœud (33, 41) étant relié en technique de données à un deuxième nœud (34, 44), le premier nœud (33, 41) provoquant, comme il convient, une activation et/ou une désactivation du deuxième nœud (34, 44),
**caractérisé en ce que**
une branche (11) principale, une première branche secondaire et une deuxième branche (28, 29, 30) secondaire, **en ce que** des nœuds (12, 18, 24, 32) sont montés dans la branche (11) principale et dans les branches (13 à 16, 19 à 21, 25 à 27, 33 à 36) secondaires dans un ordre qui correspond à un ordre à plein vitesse et **en ce que** le premier nœud (33, 41) est configuré pour alimenter en énergie électrique une électronique de communication du deuxième nœud (34, 44).
